## Europäisches Patentamt
## European Patent Office
## Office européen des brevets

(19)

(11) Publication number: **0 032 419**
A2

(12) **EUROPEAN PATENT APPLICATION**

(21) Application number: **81300020.5**

(22) Date of filing: **06.01.81**

(51) Int. Cl.³: **C 02 F 1/42**
**C 02 F 1/72, B 01 J 39/00**
**B 01 J 45/00**

(30) Priority: **15.01.80 GB 8001351**

(43) Date of publication of application:
**22.07.81 Bulletin 81/29**

(84) Designated Contracting States:
**AT BE CH DE FR GB IT LI NL SE**

(71) Applicant: **Interox Chemicals Limited**
**Hanover House Hanover Square**
**London W1R 0BE(GB)**

(72) Inventor: **Sanderson, William Ronald**
**23 Rossall Road Great Sankey**
**Warrington Cheshire WA5 2SP(GB)**

(74) Representative: **Pearce, Timothy et al,**
**Group Patent Dept. Laporte Industries Ltd. P.O. Box 8,**
**Kingsway**
**Luton Bedfordshire, LU4 8EW(GB)**

(54) Process for the detoxification of aqueous media, and a resin for use therein.

(57) The invention provides a process for detoxifying aqueous media, particularly those containing cyanides by the use of hydrogen peroxide in conjunction with a copper into the aqueous medium and after detoxification, the or another exchanger removes copper from solution to produce an effluent that is low in both cyanide and copper. In a convenient manner of operation, the process can be carried out at ambient temperature by passing an effluent through a copper loaded carboxylate acrylic resin, introducing from 1.5 to 5 moles of hydrogen peroxide per mole of cyanide at pH 9 (approx) and after detoxification, adjusting the effluent to pH 4 (approx) and passing it through a second resin.

The invention also provides chelating resins for use in detoxification in which a polymer matrix is substituted by carbamyl groups substituted at the nitrogen atom thereof by one or two alkylene amino groups or di or poly (alkylene amino) groups, the nitrogen atoms of which amino groups being so located in the amino chain that they can chelate with a metal ion.

EP 0 032 419 A2

## Process for the Detoxification of Aqueous Media and a Resin for Use therein.

The present invention relates to the detoxification of aqueous media, particularly, the removal of cyanide from aqueous media, and especially aqueous effluents, and also to a resin for use therein.

Many industries produce effluents containing cyanides, such as from electro plating works, blast furnaces, plants for the production of coke and plants for the manufacture of organic nitriles or certain esters e.g. for acrylic polymers. Cyanides, both inorganic and organic, are highly toxic, and their concentration in effluents containing them must be lowered to acceptable levels before those effluents can be discharged into watercourses. It has already been proposed to employ hydrogen peroxide to oxidise cyanides to amides or cyanates employing a soluble copper salt as an accelerator, for example in the paper by F Oehme, entitled "Comparaison des systemes conventionnelles de decontamination des cyanures." However, the use of such a system inevitably results in relatively higher concentrations of copper in the treated effluent, which is disadvantageous, because copper is itself toxic. Clearly, it is possible to subsequently treat the effluent to remove copper therefrom. Thus, in USP 4070281, there are described by Tagashika et al two types of further treatment, in one of which the copper is subsequently removed from solution by an ion exchange resin. The copper can later be salted out of the ion exchange resin, and presumably can then be used again by re-introduction into more cyanide solution. This is a cumbersome and multistep procedure. It is an object of the present invention to provide a simple procedure for copper catalysed detoxification.

According to one aspect of the present invention there is provided a process for the oxidative removal of cyanide from an aqueous alkaline solution having a pH of at least 8.5 comprising the steps of bringing the cyanide-containing solution into contact with a copper-loaded exchanger and hydrogen peroxide, so that copper catalysed hydrogen peroxide oxidation of cyanide can occur and thereafter maintaining the cyanide-depleted solution in contact with the exchanger or with a second exchanger for extracting copper from solution.

Herein the term "exchanger" is employed to indicate a material which is able to give out copper, generally in ionic form, to an aqueous solution to be detoxified and also to re-extract copper therefrom after the toxicity of the solution has been diminished.

It will be recognised that by employing a system according to the present invention, it is possible to employ relatively high concentrations of copper during the phase of hydrogen peroxide oxidation whilst producing an effluent from the cyanide removal stage that is not only low in cyanide content but is also low in copper. Using at least some of the catalysts of the present invention during the reaction it would appear that copper initially passes into solution and is reextracted. In such circumstances it will be recognised that by reextracting the copper back into the ion exchanger, the catalyst is reformed so that it can be employed to treat further quantities of cyanide-containing effluent.

In principle, any ion exchange resin that will exchange copper, for example in the form of cupric ions or in the form of anionic complexes, and in particular $Cu(CN)_4^{2-}$, can be employed. Suitable classes of ion exchangers include weak acid exchangers, strong base exchangers and chelating resins. Typical of the weak acid ion exchange resins that can be employed in the present invention are cross-linked unsaturated carboxylic acids, such as acrylic, methacrylic, or maleic acids normally cross-linked with either divinyl benzene or ethylene dimethacrylate. Alternatively, the weak acid exchangers can be based on phenolic condensation reaction products that incorporate carboxylic acid groups. Copper loaded catalysts based on weak acid exchangers can be prepared by contacting the exchanger in suitable form, particularly in the hydrogen form, ammonium form or alkali metal form, commonly the sodium form with a solution of a soluble copper salt, of which the most convenient are copper chloride and copper nitrate. The extent of ion exchange naturally depends upon the weight ratio of resin to solution, the total number of ionisable sites in the resin, the concentration of copper salt in the solution and whether or not the exchange is permitted to reach equilibrium. In practice it is desirable for at least 10 % of the alkali metal, hydrogen or ammonium ions to be replaced by copper ions.

Of special practical importance amongst the class of chelating resins are those resins containing iminodiacetate groups, of which a typical resin comprises a polystyrene substrate cross-linked with a small proportion of divinyl benzene and substituted by the iminodiacetate groups. This class of resins is again a cation exchanger, and therefore the resins can be loaded with copper employing the same techniques as employed for the weak acid exchangers.

Other chelating resins that are of interest by virtue of their ability to chelate strongly with copper over the pH range described herein include chelating resins containing diamine groups, the provision and preparation of which form further aspects of the present invention. Such resins are characterised by a polymer matrix substituted by carbamyl groups, the nitrogen atoms of which groups being substituted each by either one or two alkylene amino groups or di or poly(alkylene amino) groups, the nitrogen atoms of which amino groups are so located in the amino chain that they can chelate with a metal ion. In such resins, the nitrogen atoms are often separated by a dimethylene or polymethylene group.

The polymer matrix forming the starting point for formation of these chelating resins can be any carboxylate resin including cross-linked polyacrylic acid, poly methyacrylic acid or polymaleic acid, often formed by polymerisation of the corresponding ester followed by hydrolysis, typical cross-linking agents being divinyl benzene and ethylene dimethacrylate. Other weak carboxylic resins are based upon phenol condensation reaction products. Such starting materials are readily available commercially. Chelating resins containing amine groups can be prepared, for example, from the starting materials by formation of the acyl chloride followed by treatment with a polyamine such as triethylenetetramine or polyethyleneimine.

The first stage, namely conversion of the carboxylate group to an acyl chloride group can be carried out using, for example, excess thionyl chloride in an inert solvent, such as chloroform or other chlorinated hydrocarbons, preferably in an inert atomosphere. Residual thionyl chloride can be removed by evacuation and then washing with a fresh portion of the solvent followed by further evacuation desirably at an elevated and progressively increased temperature of up to 80 °C. In the second stage, the acyl chloride is reacted with a polyamine compound by dissolution of the latter in an inert solvent, again such as chloroform or other chlorinated hydrocarbons and mixed with the resin at a temperature in the range of 5 to 75 °C, conveniently at ambient temperature. The mixture is maintained for at least 30 minutes and preferably at least 2 hours, conveniently up to 24 hours or longer and then separated. The resin can then be washed with an alcohol such as methanol and water to remove residual amine and

acyl chloride and thereafter dried either at ambient or elevated temperature. Alternatively the chelating resins can be produced by condensation polymerisation employing a polyamine, e.g. tetraethylenepentamine as one of the components in the monomer mixture.

The third class of usable resins comprises the strong base ion exchangers of which a typical resin comprises a polystyrene substrate cross-linked with a small proportion of divinyl benzene and substituted around the benzene nucleus by an alkaline quaternary ammonium group, especially by a methylene trimethyl quaternary ammonium group, or a methylenedimethylhydroxyethyl quaternary ammonium group. Such anion exchangers can be loaded with copper by contacting the resin with a solution of a copper cyanide, such as sodium copper cyanide ($Na_2Cu(CN)_4$), and thereafter oxidised suitably with hydrogen peroxide. Preferably, the anion exchanger is not employed by itself, but together with a cation exchanger of the classes described hereinbefore.

It is highly desirable for each of the resins employed to be macroporous, otherwise referred to as macroreticular. Broadly speaking, such resins characteristically have a very high surface area: weight ratio as measured in standard tests. Such resins have a very much greater surface area per unit weight of resin than do gel-type resins and thus permit the ion exchange to occur more rapidly. Additionally, it is preferably to employ resins that are relatively resistant to abrasion, particularly for use in batch processes in which the resin in particulate form is agitated with the aqueous medium from which cyanide is to be removed. For that reason, under such conditions it is preferable to employ a resin or resins derived principally by polymerisation of acrylic acid or methacrylic acid. Furthermore resins so derived advantageously demonstrate resistance to chemical attack by hydrogen peroxide. From the foregoing, it will be recognised that two or more of the resins described herein may be employed in combination, suitable combinations including a weak-acid exchanger with a chelating exchanger, a weak acid exchanger with a strong base exchanger, a chelating exchanger with a strong base exchanger or all three.

Where the aqueous medium to be treated in the process of the present invention has initially a pH of below pH 8.5, its alkalinity can be increased by metering in an appropriate amount of a water soluble alkali such as an aqueous solution of an alkali metal hydroxide, especially sodium hydroxide, or ammonia. Naturally, the introduction of alkali, if required, can be controlled automatically by a pH electrode. Although, in principle, any pH over 8.5 could be employed, in order to minimise or substantially prevent HCN production, it is highly preferable to employ within the range of 9.0 to 10.0, since such a pH eliminates or minimises the need for additional pH adjustment after the detoxification treatment in order to enable the aqueous medium to be discharged into water courses. Advantageously, we have found that the process of the present invention is effective in such a pH range, thereby combining the advantage of cyanide removal and low residual copper concentration with that of the treated solution having a pH within or very close to the range at which it can be discharged.

The process of the present invention can be carried out at any temperature from 0 to 100 $^\circ$C. It is convenient to treat the aqueous cyanide-containing medium at its natural temperature. Depending on the circumstances of its production, its natural temperature can be ambient or an elevated temperature. If desired, the aqueous medium can be heated, for example to within the range of 30 $^\circ$C to 70 $^\circ$C, but it is preferable to employ a temperature not greater than 70 $^\circ$C, in order to avoid excessive hydrogen peroxide decomposition that can occur at very high temperatures.

The cyanide can be present in the aqueous medium in either organic or inorganic form. It is highly desirable to employ an excess of hydrogen peroxide above the stoichiometric ratio, i.e. a mole ratio of $H_2O_2$:cyanide of greater than 1:1. Preferably the mole ratio of $H_2O_2$:cyanide is not more than 10:1 and especially within the range of from 1.5 to 5. The concentration of hydrogen peroxide solution for introduction into the cyanide-containing aqueous medium is not of critical importance. It is convenient to employ commercially available solutions, such as within the range of 15 to 60 % hydrogen peroxide w/w, as such or with prior dilution to 1 % w/w which can be of value for metering in small quantities of hydrogen peroxide (when expressed as 100 % w/w). It will be recognised when such commercial solutions are introduced into the aqueous medium, the temperature of that medium will be raised but the effect is not of practical importance unless the initial concentrations of cyanide and hydrogen peroxide are relatively high, i.e. the order of several hundred ppm cyanide as $CN^-$, by weight, or higher and the ratio of hydrogen peroxide:cyanide is also very high. The process of the present invention is particularly suited for aqueous media containing from 10 to 500 ppm cyanide, calculated as $CN^-$.

The simplest method of carrying out a process according to the present invention comprises introducing an aqueous medium containing the cyanide into a vessel containing the copper-loaded resin or mixture of resins, introducing the appropriate amount of hydrogen peroxide, and then allowing the resins and medium to remain in contact for a sufficient period of time for the copper to catalyse the hydrogen peroxide oxidation of the cyanide and the copper then to be reextracted from the aqueous medium back into the resin or resins, preferably agitating the contents of the vessel throughout so as to promote the rapid exchange of copper out of and into the resins.

Thereafter, the resin can be separated from the aqueous medium by any conventional solid/liquid separator, such as a drum or plate filter or a centrifuge or by decantation. The residence time of aqueous medium in the vessel is normally within the range of 30 minutes to 300 minutes after both the resin and the hydrogen peroxide have come into contact with the aqueous medium. If desired, the hydrogen peroxide solution can be introduced into the cyanide-containing aqueous medium prior to its contact with the copper-loaded resin, or after, or part before and part after or progressively after.

In an alternative method of treatment, the copper-loaded resin is employed in the form of a fixed bed through which the aqueous medium is passed so as to exchange thereinto a proportion of the copper ions held in the bed. The aqueous medium is then passed to a reaction vessel and hydrogen peroxide can be introduced either into that vessel and/or into the aqueous medium prior to passage through the bed of resin. When the cyanide content of the medium has fallen to a desired level, preferably of below 1.0 ppm cyanide, calculated as $CN^-$, the aqueous medium can then be passed back through the bed of resin, allowing sufficient time for the copper to be exchanged out of the solution to a considerable extent. As a variation on such a procedure, the medium can be passed through a second bed of resin, which is either the same or different from the first bed of resin, but one that is still within the classes of resins disclosed hereinbefore.

Although the proportion of copper exchanged back into the resins is very high according to the process of the present invention without effecting any pH adjustment after the cyanide has been substantially destroyed, an improvement in copper recovery can be effected by acidifying the effluent to mildly acidic, e.g. to within the range of pH 4 to 6. The process of acidification can be applied either to the single vessel agitation system or to the separate resin bed and reaction vessel systems described herein, but it will be recognised that it is particularly suited to the separate resin bed and reaction vessel system in that a further vessel can conveniently be introduced between the reaction vessel and the recovery resin or alternatively acid can be introduced into the flow leading from the reaction vessel to the recovery resin.

It will be recognised that where the system employs two separate beds of resin, and the aqueous medium flows through the first bed, into a reaction vessel and after a desired residence time out through a recovery bed, there is a gradual transfer of copper from the first bed to the recovery bed. The flow of the aqueous medium through the beds can be reversed periodically so as to prevent copper breakthrough in the treated aqueous medium.

Specific embodiments of the present invention will now be described more fully by way of example only. In view of his general knowledge the skilled artisan will be able to make modifications to these embodiments based upon the foregoing disclosure without departing from the spirit of the invention, not only with respect to the detoxification of cyanide-containing effluents but also with respect to detoxification of aqueous toxic effluents or media which employs copper-catalysed hydrogen peroxide.

Example 1

For this Example, a copper-loaded ion exchange resin was first prepared by contacting at ambient temperature, 450g of a weak acid exchanger, namely a carboxylate acrylic macroreticular resin of the carboxylate type in the hydrogen form (commercially available from Rohm and Haas under the trade mark AMBERLITE IRC-50) in a 3 litre beaker equipped with a stirrer with 600 ml demineralised water alternatively called DMW hereafter and 165 ml of a 30 % w/w ammonia solution introduced slowly and with constant stirring. After 30 minutes an aqueous solution of 48g of copper nitrate in 150 ml of DMW was introduced and the mixture stirred for a further 3 hours. The aqueous phase was decanted off and the product washed with fresh and the washing/decantation cycle was repeated several times. The copper exchange of the resin as determined by difference between the copper added and removed in the combined decanted aqueous phases, was approximately 26 % $Cu^{2+}$ exchange.

The resin (5 ml) was agitated with an aqueous potassium cyanide solution (250 ml, 100 ppm calculated as $CN^-$, pH 9.0) at ambient temperature, into which was introduced an aqueous solution of hydrogen peroxide (3.5 %) to a mole ratio of $H_2O_2:CN^-$ 3:1. After 90 minutes, the aqueous solution was separated from the cation exchange resin, and its residual cyanide and copper contents measured. The copper was determined herein by extraction from 1.5N sulphuric acid into carbon tetrachloride containing zinc dibenzyldithiocarbamate and spectophotometric determination of the yellow complex formed in the organic layer. The cyanide was determined herein by distilling an acidified sample into 1.0N sodium hydroxide solution, followed by titation with 0.01N silver nitrate using p-dimethylaminobenzalrhodanine as indicator. The cyanide content was below 1 ppm and the copper content only 7.8 ppm.

Comparison 1

In this comparison, a potassium cyanide solution (250 ml, 100 ppm cyanide as $CN^-$, pH 9.0) was treated with an aqueous hydrogen peroxide solution 3.5 %) to a mole ratio of $H_2O_2:CN^-$ of 3 to 1 and a solution of copper nitrate to 100 ppm copper. The mixture was stirred for 90 minutes at ambient temperature and the residual cyanide content, as measured was also less than 1.0 ppm, but the copper content of the solution was still 55 ppm.

From a comparison of Example 1 and Comparison 1, it will be observed that it is necessary to introduce a much higher concentration of copper ion to produce detoxification of cyanide using a homogenous water soluble copper ion catalyst in comparison with the heterogeneous copper loaded resin catalyst of the present invention. Moreover, at the end of Example 1, by reforming the catalyst, the copper is again in a form suitable for re-use whereas at the end of Comparison 1, the copper is in a highly dispersed form and unsuitable for re-use except after concentration.

Example 2

In this Example, the process of Example 1 was followed, except that the resin employed was a chelating resin in which a cross-linked polyacrylic resin was substituted by imino diacetate groups, which was available from Rohm and Haas under the trade name AMBERLITE IRC 718. The catalyst was prepared by contacting 50 ml of the sodium form with 80 ml of DMW and a solution of 1.83g copper nitrate trihydrate in 70 ml DMW with stirring for 2 hours in a 200 ml beaker. The aqueous phase was decanted off and the resin washed by repeatedly stirring with portions of DMW and decanting off the aqueous phase. By comparison between the copper content of the washing and that introduced the copper exchange was determined to be 27.9 % w/w.

After 90 minutes, the cyanide concentration in the aqueous solution had fallen to 1.3 ppm $CN^-$. The catalyst and aqueous solution were permitted to remain in contact for a further 60 minutes by which time the cyanide concentration had fallen to below 1.0 ppm and the dissolved copper concentration as measured was 0.9 ppm.

It will be seen that by employing a chelating type of resin, and a slightly longer reaction time, an excellent re-absorption of copper into the resin can be obtained.

Example 3

In this Example a mixture of two catalysts was employed. Catalyst A was made by contacting 150 ml of an $Na^+$ carboxylate acrylic macroreticular ion exchange resin available from Rohm and Haas under the name AMBERLITE DP1 with 200 ml demineralised water in a 600 ml beaker equipped with a stirrer, into which was introduced 4.6g of copper nitrate dissolved in 50 ml water. The mixture was stirred for an hour, separated by decantation and the copper-loaded resin washed by repeated stirring with water and decantation. The copper exchange, determined by the same method as for the catalyst used in Example 1 was approximately 10 %. Catalyst B was made by contacting 50 ml of a Cl⁻ quaternary ammonium polystyrene macroreticular ion exchange resin available from Rohm and Haas under the name AMBERLITE IRA-900 with 100 ml demineralised water in a 250 ml beaker equipped with a stirrer. 50 ml N sodium hydroxide was introduced, the mixture was stirred for 30 minutes and the liquid phase decanted off. A further 100 ml water and 50 ml 0.1 N sodium hydroxide was added to the resin, the mixture stirred for 10 minutes and the liquid phase decanted off. The resin was then contacted with a solution of 6.6g potassium cyanide in 150 ml water for 30 minutes with stirring and the liquid phase again decanted off. Next, the resin was contacted with a solution of 1.21g copper nitrate in 150 ml water for 30 minutes with stirring, and the copper loaded resin washed thoroughly as for catalyst A. Finally, 10 ml of the washed product was stirred with 25 ml water in a 100 ml beaker into which was introduced at 2 minute intervals 2 ml of 3.5 % w/w hydrogen peroxide solution until a total of 50 ml solution had been introduced. Stirring was continued for a further 10 minutes. The product was allowed to stand overnight and then thoroughly washed by the same method. The copper exchange, determined as before was 20 %.

The process of detoxification was carried out as in Example 1, except that catalysts A and B were each used in 5 ml amounts. A sample of solution extracted after 45 minutes indicated a cyanide content of 1 ppm and after 90 minutes of below 0.2 ppm. The residual copper after 90 minutes was only 0.17 ppm copper.

Example 4

In this Example, the catalyst mixture that had been separated from the detoxified solution in Example 3 was employed to detoxify a fresh solution of potassium cyanide under the same conditions and with the addition of hydrogen peroxide to a mole ratio of 3:1 $H_2O_2$:cyanide as in the previous example. When the catalyst mixture was employed on the fourth such occasion, in identical manner to that in Example 3, and without any reactivation of the catalyst between treatment of the aqueous solutions, the cyanide content of the aqueous solution after 45 minutes contact was 1.0 ppm and after 90 minutes was only 0.2 ppm. The residual copper content of the aqueous solution after 90 minutes contact was 0.32 ppm copper.

From Example 4 it can be seen that the ion exchange catalyst/hydrogen peroxide system of the present invention can be employed on a plurality of occasions without any marked impairment of the ability of the catalyst/hydrogen peroxide system to detoxify cyanide being detected.

Example 5

In this Example an aqueous potassium cyanide solution (250 ml, 100 ppm $CN^-$) was agitated with catalyst A of Example 3 (5 ml) and aqueous hydrogen peroxide solution (3.5 % w/w) to a mole ratio of $H_2O_2$ to $CN^-$ of 3:1 at pH 9 and ambient temperature. After 45 minutes, the cyanide content had fallen to 7.9 ppm and after 90 minutes to only 0.2 ppm. The aqueous solution was then acidified to pH 5 by introduction of hydrochloric acid and agitation of the mixture continued for a further 90 minutes. The cyanide content was still 0.2 ppm, and the copper content of the aqueous solution was only 0.56 ppm copper.

From this example it can be seen that adjustment of the solution to a mildly acidic condition after substantial detoxification of the solution also permits low residual copper content therein.

Example 6

In this Example, the process and catalyst of Example 5 was re-employed successively on fresh batches of aqueous cyanide solution, and the cyanide and copper residual concentrations measured as before. When the catalyst was being employed on the fourth occasion, the residual cyanide concentration after 90 minutes was 0.6 ppm and, after the pH adjustment and 90 minutes further agitation, the residual copper content was only 0.15 ppm.

From this Example it can be seen that an adjustment of the solution to pH 5 after detoxification continues to lead to an improved copper recapture by the catalyst, even after this has been used on several occasions.

Example 7

In this Example, the process of Example 3 was followed, employing a mixed catalyst system of which one component was catalyst A of Example 3, and the other component was catalyst C analogous to catalyst B in which the starting resin was a polyacrylic resin substrate substituted by quaternary ammonium groups.

Catalyst C was prepared by mixing 100 ml of a Cl⁻ quaternary ammonium acrylic macroreticular resin available from Rohm and Haas under the trade name AMBERLITE IRA-958 with 200 ml DMW and 85 ml of 1 N sodium hydroxide solution in a 500 ml beaker equipped with a stirrer and the resultant mixture stirred for 30 minutes. The aqueous phase was decanted off and a further addition of 200 ml DMW and 85 ml 0.1 N sodium hydroxide solution made. After 15 minutes stirring, the aqueous phase was decanted off and the resin washed thoroughly with DMW by repeatedly stirring with 300 ml amounts of DMW for 15 minutes and decanting off the aqueous phase. The resin was stirred for 30 minutes with a solution of 10.6g potassium cyanide in 300 ml DMW and the aqueous phase decanted off. Next, the resin was stirred for 30 minutes with a solution of 2.42g copper nitrate trihydrate in 300 ml DMW, and the aqueous phase decanted into a 1 litre volumetric flask. The resin was then mixed with 200 ml DMW and 300 ml of 3.5 % w/w hydrogen peroxide solution. After 1 hour stirring the mixture was left to stand unstirred overnight. The aqueous phase was again decanted into the volumetric flask and the resin washed three times by stirring each time with a 60 ml portion of DMW and then decanting into the flask. From analysis of the flask contents it was determined that the copper exchange had been 24.1 %.

When a mixture of 5 ml each of catalysts A and C were employed at pH 9.0 to detoxify 250 ml containing 100 ppm cyanide as $CN^-$ together with hydrogen peroxide in an $H_2O_2:CN^-$ mole ratio of 3:1, residual cyanide content was 0.6 ppm after 45 minutes and less than 0.2 ppm after 90 minutes. The dissolved copper concentration after 90 minutes was 0.26 ppm.

Example 8

In this Example the catalyst employed was prepared by first forming an amino chelate resin and then loading it with copper. A carboxylate resin in the $H^+$ form (50 g) available under the name AMBERLITE IRC-50 from Rohm and Haas was dried by stirring with excess methanol for 3 hours at ambient temperature, filtered and dried overnight under vacuum at 70 °C. The dried resin was then stirred for 60 minutes at ambient temperature with a solution of thionyl chloride (73 ml) in chloroform (200 ml), under a nitrogen atmosphere. Residual thionyl chloride and chloroform were removed by evacuation at 20 °C and then at 50 °C for overnight. A small portion (100 mls) of chloroform was then added and the evacuation repeated in step wise increases in temperature up to 70 °C. The resin now containing acyl chloride groups, was stirred at ambient temperature with triethylenetetramine (75 g), dissolved in chloroform (200 ml), i.e. approximately a 1:1 mole ratio of trien:carboxylate group present originally, for 6 hours. After separation, the resin washed with a small volume of methanol and copious quantities of water to remove any residual trien and then dried under vacuum at 75 °C. Then, 50 ml of dry chelate resin was mixed with 80 ml DMW and poured into a 400 ml beaker equipped with a stirrer. The resin was then mixed with 70 ml DMW containing 5.8g copper nitrate trihydrate for 2 hours. After standing overnight the resin was washed with successive portions of 100 ml DMW until the resultant liquid decanted off was colourless to the eye. The copper exchange was about 25 %. 5 ml of the catalyst was contacted at pH 9 with 250 ml of aqueous potassium cyanide containing 100 ppm cyanide as CN⁻ and hydrogen peroxide in a mole ratio of 3:1 to CN⁻. The cyanide content had fallen to 0.3 ppm after 90 minutes. After a further 90 minutes stirring the copper content had fallen significantly to less than 1 ppm.

Example 9

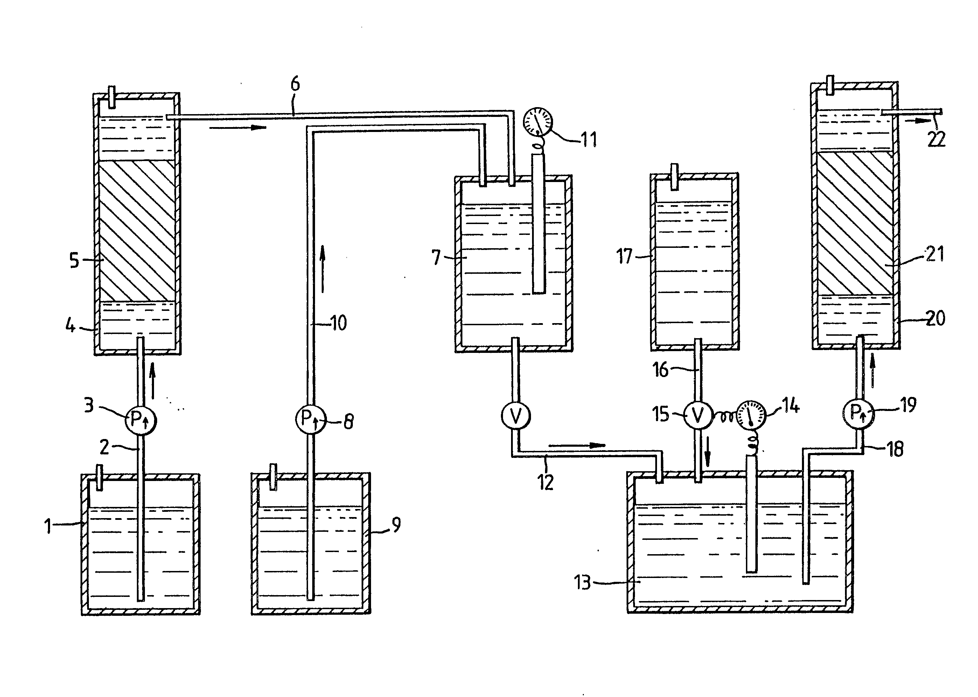

In this Example, a cyanide solution was detoxified employing apparatus shown herein in the Figure in diagrammatic form.

In operation, an aqueous cyanide -containing solution is pumped by pump 3 from cyanide storage tank 1 through line 2 upwardly into the base of column 4 which is filled in its central section with a copper loaded catalyst 5. The cyanide solution now containing copper ions overflows through line 6 into holding tank 7 into which is also fed hydrogen peroxide solution pumped by pump 8 from storage tank 9 through supply line 10. Holding tank 7 is also equipped with pH detector 11 the signal from which can be employed if desired to control the inflow of alkali into the holding tank 7 to maintain a desired pH, the alkali storage tank and flow control means and supply line not being illustrated. The cyanide solution, now at least partially detoxified flows via outlet 12 to pH adjustment tank 13 equipped with pH detector 14 the signal from which controls flow control valve 15 in acid supply the 16 from acid holding tank 17. From adjustment tank 13 the solution is pumped through outlet line 18 by pump 19 to column 20 holding in its central section a second resin 21.

The detoxified solution containing a small concentration of copper is discharged through overflow 22.

In Example 9, the cyanide solution in tank 1 was at pH 9 and had a concentration of 200 ppm as CN⁻ and hydrogen peroxide solution (pH 9) having a concentration of 3.0 % by weight was employed. The rates of pumping of the solutions through lines 2, 10 and 18 and passage through line 12 were arranged as to give an average residence time of 22 minutes in contact with catalyst 5, 71 minutes above the catalyst 5 in column 4, 90 minutes in holding tank 7, 45 minutes in pH adjustment tank 13 and 11 minutes in contact with catalyst 21 in column 20. The solution was adjusted to pH 4 in tank 13. The copper and cyanide contents in the effluent were measured and summarised herein below. Catalyst 5 was a sample of Catalyst A as prepared in Example 3 and resin 21 was a sample of a carboxylate acrylic macroreticular ion exchange resin available from Rohm and Haas under the name AMBERLITE DPI.

It will be recognised that in the course of passage through the apparatus the solution first leached copper into solution, from the catalyst 5, the concentration in tank 7 varying within the range of 35 to 40 ppm and gave up copper to catalyst 21. Furthermore by a modification to the apparatus (not illustrated) the flow could be switched to pass from tank 1 through column 20 to tank 7 and the outflow from tank 13 passed through column 4 to discharge, thereby effectively enabling the system to have an extended life.

Table 1

| Time of Measurement | Residual Concentration (ppm) | |
| --- | --- | --- |
| | $Cu^{2+}$ | $CN^-$ |
| 1st day | 0.29 | 1.23 |
| 2nd day | 2.08 | 2.85 |
| 3rd day | 2.54 | 2.76 |

Example 10

In this Example, the apparatus, catalyst 5, resin 21 and conditions of Example 9 were employed except that the average residence time in reaction tank 7 was increased to 120 minutes.

### Table 2

| Time of Measurement | Residual Concentration (ppm) | |
| --- | --- | --- |
| | $Cu^{2+}$ | $CN^-$ |
| 1st day | 0.22 | 0.56 |
| 2nd day | 0.38 | 0.97 |
| 3rd day | 0.46 | 1.76 |

From this Table it can be seen that the effect of employing a longer residence time is to enable the system to detoxify effectively for longer.

0032419
GC 104 Eur

CLAIMS

1.  A process for the oxidation removal of cyanide from an aqueous alkaline solution thereof having a pH of at least 8.5 by reaction between hydrogen peroxide and cyanide in the presence of a catalytic amount of copper, characterised in that the cyanide-containing solutions is brought into contact with a copper-loaded exchanger and hydrogen peroxide whereby the oxidation can occur and is thereafter maintained in contact with the exchanger or a. second exchanger in order to extract copper from solution and thereby reform a copper loaded exchanger.

2.  A process according to claim 1 characterised in that the exchanger is a weak acid exchanger, strong base exchanger or a chelating resin.

3.  A process according to claim 2 chaaracterised in that the exchanger is an iminodiacetate-containing chelating resin.

4.  A process according to any preceding claim characterised in that the exchanger is a mixture of cation and an anion exchanger.

5.  A process according to any preceding claim characterised in that it is carried out continuously by passing the cyanide-containing solution through two beds of ion exchangers, the first being copper-loaded and the second for re-extracting the copper located downstream from the first exchanger, at a distance permitting the cyanide to be oxidised, the direction of flow through the two beds periodically being reversed.

**0032419**

GC 104 Eur

6. A process according to any preceding claim characterised in that the pH of the solution is adjusted to the range 4 to 6 after the cyanide has been oxidised and before the copper re-extracted.

7. A chelating resin suitable for use in a process according to any preceding claim characterised by a polymer matrix substituted by carbamyl groups, the nitrogen atoms of which groups being substituted by either one or two alkyleneamino or di or poly(alkyleneamino) groups, the nitrogen atoms of which amino groups are so located in the amino chain for chelation with a metal ion.

8. A chelating resin according to claim 7 characterised in that the polymer matrix is a crosslinked carboxylic resin, and the chelating resin is obtained by converting carboxylate groups in the matrix to acyl chloride groups and thereafter reacting the acyl chloride groups with a polyamine.

0032419